# EUROPÄISCHE PATENTSCHRIFT

(11) **EP 2 987 301 B1**
(45) Veröffentlichungstag und Bekanntmachung des Hinweises auf die Patenterteilung: **14.11.2018**
(21) Anmeldenummer: 14733560.8
(22) Anmeldetag: 11.06.2014
(51) Int. Cl.: H04L 29/06

(54) **ÜBERWACHUNG DER FUNKTIONALITÄT EINER NETZWERKFILTEREINRICHTUNG**
CONTROLLING THE FUNCIONALITY OF A NETWORK FILTER
CONTROLER LA FONCTIONALITE D'UN FILTRE DE RESEAU

(30) Priorität: 25.07.2013 DE 102013214522
(43) Veröffentlichungstag der Anmeldung: 24.02.2016
(73) Patentinhaber: Siemens Aktiengesellschaft, 80333 München (DE)
(72) Erfinder: BUSSER, Jens-Uwe, 85579 Neubiberg (DE)
(86) Internationale Anmeldenummer: PCT/EP2014/062087
(87) Internationale Veröffentlichungsnummer: WO 2015/010824

(56) Entgegenhaltungen:
- US-A1- 2003 123 456
- US-A1- 2004 030 776
- US-A1- 2010 131 616
- ZOUHEIR TRABELSI ET AL: "Multilevel early packet filtering technique based on traffic statistics and splay trees for firewall performance improvement", COMMUNICATIONS (ICC), 2012 IEEE INTERNATIONAL CONFERENCE ON, IEEE, 10. Juni 2012 (2012-06-10), Seiten 1074-1078, XP032274044, DOI: 10.1109/ICC.2012.6364218 ISBN: 978-1-4577-2052-9

## Beschreibung

Die Erfindung betrifft ein verbessertes Verfahren und eine verbesserte Vorrichtung zum Filtern von Netzwerkverkehr und zur Überwachung einer Filterfunktionalität mittels einer Netzwerkfiltereinrichtung an einer Kopplungsstelle zwischen einem ersten Netzwerk und einem zweiten Netzwerk.

Datennetzwerke für kritische Infrastrukturen, wie beispielsweise Datennetzwerke zur Steuerung von industriellen Anlagen, zur Energieverteilung oder im Umfeld des Transportwesens, sind historisch als separate Netzwerke entstanden. Vermehrt werden Datennetzwerke miteinander, mit Unternehmensnetzwerken zur Verwaltung oder mit anderen, öffentlichen Netzwerken, wie beispielsweise dem Internet, verbunden, um Arbeitsabläufe zu vereinfachen, zu beschleunigen oder um neue Funktionen zu ermöglichen. Es werden für die Datennetzwerke und ihre Kopplung zunehmend Standardkomponenten aus der IT-Welt, sogenannte Commercial off the shelf-Produkte, kurz COTS-Produkte, -Protokolle oder -Lösungen, verwendet. Diese sind sehr gut erprobt, leicht verfügbar und relativ kostengünstig.

Dies führt dazu, dass kritische Infrastrukturen zunehmend von Problemen aus der IT-Welt, wie dem Umgang mit Schadsoftware oder Hackerangriffen, und daraus entstehenden Gefahren betroffen sind. Sie stellen insbesondere ein interessantes Angriffsziel für Spionageversuche oder sogenannte elektronische Kriegsführung, Cyber Warfare, dar.

Es sind Filtereinrichtungen, sogenannte Firewalls, bekannt mit einem konfigurierten Regelsatz, welcher festlegt, welches Datenpaket aufgrund seiner Eigenschaften weitergeleitet wird und welches gelöscht wird. Bei einem Datenverkehr zwischen zwei Netzwerken kann dies direkt über eine einzige Firewall realisiert sein. Es ist ferner möglich, eine sogenannte entmilitarisierte Zone, auch demilitarized zone oder DMZ genannt, einzurichten, die durch jeweils eine Firewall von dem jeweiligen Netzwerk getrennt ist.

Ferner sind sogenannte dreibeinige Firewalls bekannt, welche keinen direkten Verkehr zwischen einem externen und internen Datennetzwerk erlauben, sondern nur über die DMZ.

Es ist bekannt, mehrere Firewalls parallel zu betreiben. Dafür ist ein internes Datennetzwerk an mehreren Stellen mit einem externen Datennetzwerk verbunden. Es ist dann vorteilhaft, eine Bauart, einen Hersteller oder ein Betriebssystem identisch oder zumindest ähnlich zu wählen, um einem Angreifer möglichst wenig Auswahl an möglichen Sicherheitsschwachstellen zu bieten.

Das Paper "Multilevel early packet filtering technique based on traffic statistics and splay trees for firewall performance improvement" von Zouheir Trabelsi et al. beschreibt einen Mechanismus zum Verbessern einer Paketfilterzeit von Firewalls, indem die Reihenfolge von Security Filtern so optimiert wird, dass Pakete frühzeitig zurückgewiesen werden.

Die US 2004/0030776 A1 beschreibt ein zweistufiges Datenpaket-Filterverfahren, bei welchem diejenigen Datenpakete, die von einem ersten Filter aufgrund einer ersten Filterregel aussortiert werden, von einem zweiten Filter mit einer zweiten Filterregel überprüft werden.

Die US 2010/0131616 A1 beschreibt ein System, bei welchem eine erste Firewall zwischen dem Internet und einem Frontend vorgesehen ist, wobei das Frontend eine Benutzerschnittstelle zur Kommunikation mit einem über das Internet darauf zugreifenden Benutzer aufweist. Daten, auf die der Benutzer zugreifen möchte, sind in einem Backend gespeichert, welches über eine zweite Firewall von dem Frontend getrennt ist.

Es besteht ein Bedarf, Datennetzwerke so miteinander zu verbinden, dass die gewünschten zu übermittelnden Daten auf eine einfache Weise ausgetauscht werden und gleichzeitig eine Überwachung der zu übermittelnden Daten stattfindet. Es ist eine Aufgabe der vorliegenden Erfindung, ein verbessertes Verfahren und eine verbesserte Vorrichtung zur Überwachung einer Filterfunktionalität mittels einer Netzwerkfiltereinrichtung bereitzustellen.

Erfindungsgemäß wird in einem Verfahren zum Filtern mindestens eines Datenpaketes mittels einer Netzwerkfiltereinrichtung an einer Kopplungsstelle zwischen einem ersten Netzwerk und einem zweiten Netzwerk, wobei die Netzwerkfiltereinrichtung aus einer ersten und einer zweiten Einheit besteht und die erste Einheit und die zweite Einheit seriell angeordnet werden und wobei die erste Einheit eine Filterregel aufweist und die zweite Einheit die Filterregel aufweist, in einem ersten Schritt mindestens ein Bestandteil des mindestens einen Datenpaketes durch die erste Einheit blockiert, falls aufgrund der Filterregel durch die erste Einheit eine erste Einordnung des mindestens einen Bestandteiles in eine erste Gefahrenkategorie durchgeführt wird, oder weitergeleitet, falls aufgrund der Filterregel durch die erste Einheit ein erstes Freigabesignal erzeugt wird. In einem zweiten Schritt wird durch die zweite Einheit ein Alarmsignal ausgegeben, falls aufgrund der Filterregel durch die zweite Einheit eine zweite Einordnung des mindestens einen Bestandteiles in eine zweite Gefahrenkategorie durchgeführt wird.

Dies bedeutet eine besonders sichere Kopplung von Datennetzwerken, da das erste Netzwerk und das zweite Netzwerk mit zwei seriell betriebenen Einheiten, welche insbesondere Firewalls sind, mit zumindest teilweise gleichen oder ähnlichen Filterregeln oder Regelsätzen verbunden sind. Die erste Einheit kann als Front Firewall bezeichnet werden, welche ein Datenpaket zeitlich vor der zweiten Einheit, welche auch Back Firewall genannt werden kann, empfängt. Das Datenpaket passiert die erste Einheit durch die serielle Anordnung in einer Übermittlungsrichtung also vor der zweiten Einheit. Damit stellt die zweite Einheit oder Backfirewall eine Art Sensor dar, welcher ein Alarmsignal ausgibt, falls mindestens ein Bestandteil eines zu prüfenden Datenpaketes aufgrund der Filterregel als unzulässig eingeordnet wird.

Ein durch die erste Einheit erzeugtes Freigabesignal enthält zumindest die Information, dass das Datenpaket weiterzuleiten ist, es kann ferner Kennzeichnungen oder Flags enthalten, die das Datenpaket näher charakterisieren. Es kann ferner mittels einer Netzwerk Adressen-Übersetzung oder Network-Address-Translation das Datenpaket verändert werden, indem der IP-Adress-Bereich durch den Empfänger des Datenpaketes überschrieben wird und das Datenpaket weitergeleitet wird.

Erhält die zweite Einheit einen Bestandteil des zu prüfenden Datenpaketes, welcher als unzulässig eingestuft wird, so wurde dieser Bestandteil durch die erste Einheit oder Front Firewall nicht als unzulässig eingestuft. Die zweite Einheit oder Back Firewall kann nur Datenpakete oder Bestandteile des Datenpakets empfangen, welche durch die erste Einheit oder die Front Firewall aufgrund der Filterregel als bestimmungsgemäß zur Weiterleitung an das zweite Netzwerk eingestuft wurden.

Sobald also die zweite Einheit bei einer Überprüfung eines Bestandteiles des Datenpaketes einen Hinweis auf eine Unregelmäßigkeit aufgrund des Bestandteiles erkennt, so wirkt die zweite Einheit als Sensor zur Überwachung der ordnungsgemäßen Funktion der ersten Einheit. In einem solchen Fall ist eine Funktionsweise der ersten Einheit nicht garantiert. Dies kann durch Manipulation, Angriffe oder versehentliche Fehlkonfigurationen verursacht werden.

Für den Fall, dass sowohl durch die erste Firewall als auch durch die zweite Firewall der mindestens eine Bestandteil des mindestens einen Datenpaketes weitergeleitet wird, gelangt ein mit hohen Sicherheitsanforderungen geprüftes Datenpaket in das Netzwerk.

Durch die Übereinstimmung der Filterregel auf der ersten Einheit mit der Filterregel auf der zweiten Einheit sind beide Einheiten oder Firewalls gleich konfiguriert oder zumindest sind Teile eines Filterregelsatzes identisch. Daher dürfen aus dem ersten Netzwerk stammende Datenpakete, die nicht regelkonform sind, die zweite Einheit oder Back Firewall nicht erreichen, sondern diese müssen bereits von der ersten Einheit oder Front Firewall blockiert worden sein. Tritt dennoch das Ereignis auf, dass die zweite Einheit oder Back Firewall einen Bestandteil des mindestens einen Datenpaketes erkennt, welcher nicht regelkonform ist, so bedeutet dies, dass bei mindestens einer der beiden Firewalls ein Fehler vorliegt. Dies kann eine Fehlkonfiguration sein oder auf eine Manipulation hindeuten.

Die zweite Gefahrenkategorie wird durch die Filterregel vorgegeben: Ein Datenpaket wird der zweiten Gefahrenkategorie zugeordnet, falls die zweite Einheit das Datenpaket aufgrund der Filterregel nicht weiterleitet. Eine feinere Unterteilung ist denkbar, falls für verschiedene Filtervorschriften, die ein Datenpaket nicht erfüllt, verschiedene Gefahrenkategorien vorgesehen sind, die verschiedene Arten von Alarmen auslösen, beispielsweise Speichern des Datenpaketes zur späteren Analyse, Benachrichtigung eines Systemadministrators oder Sperren des gesamten Datenverkehrs, je nach Gefahrenkategorie.

Unter einer Filterregel ist insbesondere ein Teil eines Filterregelsatzes zu verstehen, so dass ein Datenpaket auf unterschiedliche Filtervorschriften hin überprüft wird.

Gemäß einer Ausführungsform wird der mindestens eine Bestandteil durch die zweite Einheit blockiert, falls die zweite Einordnung in die zweite Gefahrenkategorie durchgeführt wird. Dies bedeutet, dass die zweite Einheit neben der Sensoreigenschaft auch eine Filtereigenschaft im ursprünglichen Sinne einer Firewall innehat. Neben dem Ausgeben des Alarmsignales ist die zweite Einheit also auch in der Lage, einen nicht regelkonformen Bestandteil des Datenpaketes nicht an das zweite Netzwerk weiterzuleiten.

Gemäß einer Weiterbildung wird durch die Netzwerkfiltereinrichtung in Abhängigkeit von dem Alarmsignal ein Protokoll erstellt.

Dadurch ist eine Protokollierung eines Ereignisses gewährleistet, durch welches das Alarmsignal ausgelöst wird. Dabei kann eine Historie beispielsweise an einen Überwachungsserver gesendet werden, sobald das Alarmsignal ausgegeben wird. Das Alarmsignal kann eine Statusmeldung sein, die eine Abweichung, beispielsweise einer in dem Datenpaket enthaltenen IP-Ziel-Adresse von einem vorgegebenen, vertrauenswürdigen IP-Ziel-Adressbereich, berichtet. Ein Protokoll enthält dann eine Auflistung der vorgefunden IP-Ziel-Adresse und vorzugsweise weitere Angaben, über Sender, Uhrzeit usw. Dadurch wird beispielsweise die Wartung der Netzwerkfiltereinrichtung durch einen Wartungsservice erleichtert.

Gemäß einer weiteren Ausführungsform wird durch die Netzwerkfiltereinrichtung in Abhängigkeit von dem Alarmsignal eine Benachrichtigung eines Überwachungssystems veranlasst.

Dadurch kann ein Notfallsignal ausgegeben werden, welches beispielsweise die Überprüfung durch Servicepersonal oder durch eine Überwachungskomponente einer Anlage innerhalb des zweiten Netzwerkes veranlasst.

Gemäß einer Weiterbildung wird in Abhängigkeit von dem Alarmsignal ein Umschalten der ersten Einheit und/oder der zweiten Einheit auf eine neue Filterregel durchgeführt.

So kann ein Regelsatz vorgesehen sein, welcher im Falle eines Alarmsignales der zweiten Einheit gültig wird. Es kann sich dabei um einen verschärften Regelsatz handeln, welcher höhere Sicherheitsanforderungen für das Weiterleiten des Bestandteiles des Datenpaketes aufgrund einer strengeren Filterregel durchsetzt.

Gemäß einer weiteren Ausführungsform wird in Abhängigkeit von dem Alarmsignal ein Sperren der ersten Einheit und/oder der zweiten Einheit durchgeführt.

Insbesondere wird das Alarmsignal in der zweiten Einheit derart verarbeitet, dass durch das Ausgeben des Alarmsignales ein Weiterleiten von Datenpaketen oder Bestandteilen von Datenpaketen vollständig unterbunden wird. Ferner ist es möglich, dass eine Steuerungseinheit das Alarmsignal von der zweiten Einheit erhält und an die erste Einheit weiterleitet, um auch dort ein Weiterleiten von Datenpaketen oder Bestandteilen von Datenpaketen zu stoppen. Es wird dann der gesamte Datenverkehr bereits an der ersten Einheit blockiert.

Gemäß einer Ausführungsform werden in Abhängigkeit von dem Alarmsignal einem System Parameter für einen Notfallzustand vorgegeben.

Dabei kann das Alarmsignal insbesondere einen fail-silent Zustand einer Steuerungsanlage bewirken, so dass ein Verarbeitungsprozess, der beispielsweise einen Befehl aus der Kommunikation über die Netzwerkfiltereinrichtung umsetzt, gestoppt wird.

Gemäß einer Weiterbildung werden die erste Einheit und die zweite Einheit als Firewall oder Datendiode ausgestaltet.

Der Einsatz einer Datendiode kann zusätzlich bewirken, dass der Datenverkehr nur in einer Richtung durchgelassen wird. Die Datendiode kann als Firewall realisiert sein.

Gemäß einer Ausführungsform stellt das erste Netzwerk ein externes oder öffentliches Netzwerk und das zweite Netzwerk ein internes Netzwerk dar.

Damit wird ein Datenpaket untersucht, welches aus einem unsicheren öffentlichen Netz in ein sicheres Netz weitergeleitet werden soll. Bei dem unsicheren öffentlichen Netz kann es sich insbesondere um das Internet handeln, bei dem sicheren Netzwerk dagegen um ein Firmennetzwerk, ein Netzwerk einer Automatisierungsanlage oder ein Krankenhausnetzwerk.

Gemäß einer Ausführungsform wird das mindestens eine Datenpaket von dem ersten Netzwerk in das zweite Netzwerk oder von dem zweiten Netzwerk in das erste Netzwerk übermittelt.

Neben einer Untersuchung eines Datenpaketes aus einem unsicheren Netz zur Verhinderung einer Einschleusung von Schadsoftware oder zur Erkennung von sonstigen Angriffen, ist es ferner sinnvoll, den aus einem sicheren Netzwerk ausgehenden Datenverkehr zu untersuchen. Damit kann erkannt werden, falls ein Datenpaket, welches nicht zur Übermittlung in ein öffentliches oder unsicheres Netzwerk bestimmt ist, von einem internen Netzwerk in ein externes Netzwerk übermittelt wird. Dadurch kann Datenverkehr, der ein sicheres Netzwerk nicht verlassen soll, sowohl aufgrund von fehlerhafter Konfiguration oder fehlerhafter Datenverarbeitung innerhalb des ersten oder sicheren Netzwerkes, als auch aufgrund von Datenmanipulation oder Angriffen auf das sichere Netzwerk vor einem unerwünschten Weiterleiten an ein unsicheres Netzwerk geschützt werden.

Gemäß einer Weiterbildung werden die erste Einheit und die zweite Einheit mit unterschiedlichen Betriebssystemen ausgebildet und/oder von unterschiedlichen Herstellern hergestellt.

Die Verwendung verschiedener Betriebssysteme streut das Risiko von Fehlern aufgrund einer Implementierung. Es können somit gegebenenfalls vorhandene Schwachstellen eines Betriebssystems durch die erste Einheit oder die zweite Einheit ausgeglichen werden. Dabei kann es sich um Fehler handeln, welche im Betriebssystem der ersten Einheit oder der zweiten Einheit selbst begründet sind. Ferner kann es sich auch um Fehler innerhalb der Anwendungssoftware der ersten Einheit oder der zweiten Einheit, insbesondere der jeweiligen Firewallapplikation handeln. Typische Fehlerquellen sind hierbei Speicherüberläufe bei einer Ausführung eines Programms, welche Teile eines Programmcodes löschen können.

Durch die Wahl verschiedener Hersteller der jeweiligen Firewall kann bei identischem Regelsatz und jeweils fehlerfreier Implementierung dennoch eine unterschiedliche Implementierung gewährleistet werden, welche einerseits gegebenenfalls unterschiedliche Schwachstellen aufweist sowie andererseits aus Sicht eines Angreifers unterschiedliche Sicherheitshürden bereitstellt.

Gemäß einer Ausführungsform wird durch die erste Einheit und die zweite Einheit ein identischer Durchsatz erreicht.

Es können somit zwei Firewalls gebaut werden, welche gleich leistungsstark ausgebildet sind. Damit können Anforderungen zur Überprüfung eines Datenverkehrs, welcher die erste Einheit vor der zweiten Einheit passiert, genauso gewährleistet werden wie Anforderungen an die Prüfung eines Datenpaketes, welches die zweite Einheit vor der ersten Einheit, insbesondere in einer entgegengesetzten Übertragungsrichtung, passiert.

Gemäß einer Ausführungsform wird eine leistungsfähigere Einheit in einer Übermittlungsrichtung vor einer leistungsschwächeren Einheit eingerichtet.

Somit fängt die leistungsfähigere Einheit, beispielsweise eine Front Firewall mit hohem Durchsatz, eine größere Last ab, da der gesamte Datenverkehr über die Frontfirewall geleitet wird. Die Filterung durch die Frontfirewall blockiert ggf. dann Pakete, welche nicht regelkonform sind, so dass ein durch die Front Firewall gefilterter Datenverkehr eine ggf. reduzierte Größe besitzt. Damit kann eine gegebenenfalls länger dauernde Bearbeitung der leistungsschwächeren Einheit, insbesondere einer leistungsschwachen Back Firewall, ausgeglichen werden.

Gemäß einer Weiterbildung ist das zweite Netzwerk als Isolationszone zwischen dem ersten Netzwerk und einem weiteren Netzwerk eingerichtet.

Bei der Isolationszone kann es sich insbesondere um eine entmilitarisierte Zone, eine sogenannte Demilitarized Zone, kurz DMZ, handeln. Eine DMZ wirkt derart, dass jeder Datenverkehr zwischen zwei Netzwerken zunächst über eine Front Firewall an die DMZ geleitet wird. Diese erste Firewall blockiert also einen Bestandteil eines Datenpaketes, falls er direkt an ein weiteres Netzwerk adressiert ist. Zusätzlich können beliebige Filterregeln konfiguriert sein. Eine zweite Firewall, welche zwischen der DMZ und einem weiteren Netzwerk eingerichtet ist, filtert den von der DMZ ausgehenden Datenverkehr. Die Konfigurationsregeln für die erste Firewall und die zweite Firewall sind daher unterschiedlich und auf die jeweils verwendeten Protokolle ausgerichtet.

Zwischen einem ersten Netzwerk und der Isolationszone kann nun auf vorteilhafte Weise zusätzlich zur ersten Einheit die zweite Einheit eingerichtet sein. Auch zwischen dem ersten Netzwerk und der Isolationszone ist somit ein Sensor vorhanden, welcher gegebenenfalls ein Alarmsignal ausgibt.

Der mindestens eine Bestandteil wird durch die erste Einheit blockiert, falls aufgrund der Filterregel durch die erste Einheit eine erste Einordnung des mindestens einen Bestandteiles in eine erste Gefahrenkategorie durchgeführt wird.

Ein Bestandteil, welcher nicht regelkonform ist, wird damit bereits von der ersten Einheit oder Front Firewall blockiert. Dieser Vorgang bedeutet eine ordnungsgemäße Ausführung durch die erste Einheit. Eine Manipulation oder Fehlkonfiguration der Front Firewall wird dadurch nicht nahegelegt und ein Alarmsignal durch die zweite Einheit oder Back Firewall entsprechend nicht ausgegeben.

Gemäß einer Ausführungsform stellt auf der ersten Einheit die Filterregel einen Teil eines Filterregelsatzes dar, wobei das Datenpaket durch die erste Einheit aufgrund des Filterregelsatzes geprüft wird. Eine zweite, zusätzliche Filterung durch die zweite Einheit wird entsprechend nicht für den gesamten auf der ersten Einheit konfigurierten Filterregelsatz durchgeführt, sondern nur für einen Teil davon. Diesen Teil betreffend besteht wiederum die Sensoreigenschaft der zweiten Einheit aufgrund der doppelten Prüfung.

Die Erfindung betrifft weiterhin eine Netzwerkfiltereinrichtung zum Filtern mindestens eines Datenpaketes an einer Kopplungsstelle zwischen einem ersten Netzwerk und einem zweiten Netzwerk, umfassend eine erste Einheit und eine zweite Einheit, wobei die erste Einheit und die zweite Einheit seriell angeordnet sind, die erste Einheit aufweisend eine Filterregel und die zweite Einheit aufweisend die Filterregel, wobei mindestens ein Bestandteil des mindestens einen Datenpaketes zum Blockieren durch die erste Einheit ausgeführt ist, falls aufgrund der Filterregel durch die erste Einheit eine erste Einordnung des mindestens einen Bestandteiles in eine erste Gefahrenkategorie durchgeführt wird, oder zum Weiterleiten durch die erste Einheit ausgeführt ist, falls aufgrund der Filterregel durch die erste Einheit ein erstes Freigabesignal erzeugt wird, wobei die zweite Einheit zum Ausgeben eines Alarmsignals ausgestaltet ist, falls aufgrund der Filterregel durch die zweite Einheit eine zweite Einordnung des mindestens einen Bestandteiles in eine zweite Gefahrenkategorie durchgeführt wird.

Gemäß einer Weiterbildung umfasst die Netzwerkfiltereinrichtung ferner eine Steuerungseinheit zur Durchführung des Verfahrens gemäß einem der beschriebenen Ausführungsformen oder Weiterbildungen.

Die Erfindung wird mit Hilfe von Ausführungsbeispielen anhand der Figuren näher erläutert.

Es zeigen:
- Figur 1: eine schematische Darstellung eines Netzwerksystems mit einer Netzwerkfiltereinrichtung gemäß einem ersten Ausführungsbeispiel der Erfindung;
- Figur 2: eine schematische Darstellung eines Netzwerksystems mit Netzwerkfiltereinrichtungen gemäß einem zweiten Ausführungsbeispiel der Erfindung;
- Figur 3: eine schematische Darstellung eines Netzwerksystems mit einer Netzwerkfiltereinrichtung gemäß einem dritten Ausführungsbeispiel der Erfindung;
- Figur 4: eine schematische Darstellung eines Netzwerksystems mit einer Netzwerkfiltereinrichtung gemäß einem vierten Ausführungsbeispiel der Erfindung;
- Figur 5: eine schematische Darstellung eines Verfahrens zum Filtern eines Datenpaketes gemäß einem fünften Ausführungsbeispiel der Erfindung.

In den Figuren sind funktionsgleiche Elemente mit denselben Bezugszeichen versehen, sofern nichts anderes angegeben ist.

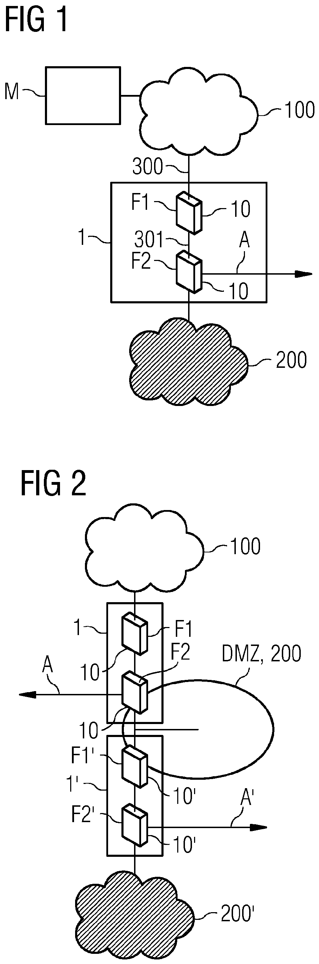

Figur 1 zeigt eine Netzwerkfiltereinrichtung 1, welche ein Datenpaket 300, welches zwischen einem ersten Netzwerk 100 und einem zweiten Netzwerk 200 übermittelt werden soll, filtert. Die Netzwerkfiltereinrichtung 1 besteht dabei aus einer ersten Einheit F1 und einer zweiten Einheit F2. Bei der ersten Einheit F1 handelt es sich um eine Front Firewall, welche eine Filterregel 10 aufweist, die derart konfiguriert ist, dass sie anhand grundlegender Protokollinformationen, z.B. Internetprotokollinformationen, Datenpakete verwirft oder akzeptiert.

Dabei können insbesondere IP-Absender- oder IP-Ziel-Adressbereiche von einer Weiterleitung ausgenommen werden. Es können ferner Absenderapplikationen oder Zielapplikationen vorgegeben sein, die als Hinweis auf ein vorzunehmendes Blockieren eines Datenpaketes gewertet werden und ein Blockieren verursachen. Zusätzlich speichert die Front Firewall F1 TLS-Zustände oder Transportschichtsicherheitszustände. Es können zusätzlich zu bestehenden Kommunikationsverbindungen Zustandsdaten über verwendete Protokolle, wie insbesondere User Datagramm Protocol oder Transmission Control Protocol oder Übertragungssteuerungsprotokoll, oder ein Zustand des Verbindungsaufbaus gespeichert werden. Bei ankommenden Nachrichten wird diese Information bei der Filterung berücksichtigt. Außerdem filtert die Front Firewall F1 aufgrund von Informationen auf Anwendungsebene. Das bedeutet eine weitergehende Analyse, die eine verbesserte Bewertung der Datenpakete erlaubt. Eine auf Anwendungsebene arbeitende Firewall verknüpft dabei insbesondere IP-Pakete und prüft dabei auf Vorhandensein einer sinnvollen Einheit, die sich durch das Zusammensetzen ergibt.

Insbesondere ist das zweite Netzwerk 200 ein Steuerungsnetzwerk und wendet aufgrund von Safety- und Security-Anforderungen sehr strenge Kriterien bei der Bewertung von Datenpaketen innerhalb des Steuerungsnetzwerkes 200 an. Dieses Steuerungsnetzwerk 200 soll mit dem ersten Netzwerk 100 über eine Kopplungsstelle gekoppelt werden. Das erste Netzwerk 100 stellt auf Sicht des Steuerungsnetzwerkes 200 ein unsicheres oder öffentliches Netzwerk dar. Es handelt sich insbesondere um ein Büronetzwerk, welches beispielsweise Aktualisierungen von Prozessparametern, welche für die Steuerungsanlage im abgesicherten Steuerungsnetzwerk 200 relevant sind, bereitstellt. Diese Aktualisierungsparameter werden durch das Büronetzwerk 100 in Abhängigkeit von Vorgaben au-ßerhalb des Steuerungsnetzwerkes 200 festgelegt. Beispielsweise werden Updates von Fahrplandaten für den Bahnverkehr innerhalb des Büronetzwerkes 100 berechnet und sollen durch eine Bahnautomatisierungsanlage berücksichtigt werden können.

An die Weiterleitung von dem Datenpaket 300 werden entsprechend hohe Anforderungen gestellt, was die Absicherung insbesondere gegen Schadsoftware oder manipulierte Prozessparameter betrifft. Für einen Angreifer M ist es beispielsweise relativ leicht, Zugriff zu einem Büronetzwerk 100 zu erhalten. Ein Angreifer M, welcher in ein Steuerungsnetzwerk 200 mit hohen Sicherheitsanforderungen eingreifen möchte, wählt bei vorhandener Kopplung an ein unsicheres Netzwerk möglicherweise den Weg über die Kopplungsstelle.

Kann die erste Einheit F1 oder Front Firewall ein Datenpaket 300 eines Angreifers M beispielsweise aufgrund einer verdächtigen Absender-IP-Adresse identifizieren, so blockiert die erste Einheit F1 das Datenpaket 300 oder einen verdächtigen Bestandteil des Datenpaketes 300. Wird durch die Front Firewall F1 dagegen ein Freigabesignal für mindestens einen Bestandteil 301 des Datenpaketes 300 erzeugt, da durch die Filterregel 10 kein Merkmal des Bestandteiles 301 erkannt wird, welches auf Manipulation oder Angriff hindeutet, so gelangt dieser Bestandteil 301 des Datenpaketes 300 zur zweiten Einheit F2 oder Back Firewall.

Diese Back Firewall F2 weist eine zumindest teilweise eine identische Konfiguration auf. D.h. die Filterregel 10, welcher auf der ersten Einheit F1 hinterlegt ist, ist auch auf der zweiten Einheit F2 hinterlegt. Kann nun aufgrund der Filterregel 10 ein Merkmal des Bestandteiles 301 durch die zweite Einheit F2 identifiziert werden, welches eine Einordnung des Bestandteiles 301 in eine Gefahrenkategorie verursacht, so wird durch die zweite Einheit F2 ein Alarmsignal A ausgegeben. Das Zuordnen zu einer Gefahrenkategorie kann dabei insbesondere über eine vorgebbare Zuordnung von Merkmalskombinationen des Datenpaketes 300 zu Angriffsszenarien erfolgen. Es kann insbesondere ein Bestandteil 301 einer Gefahrenkategorie zugeordnet werden, soweit eine Filtervorschrift der Filterregel 10 nicht erfüllt ist.

Dadurch, dass die Filterregel 10 sowohl auf der Front Firewall F1 als auch auf der Back Firewall F2 identisch konfiguriert ist, ist bei ordnungsgemäßem Ablauf ein Einordnen des Bestandteiles 301 in eine zweite Gefahrenkategorie, die durch die Back Firewall F2 gegeben ist, durch die Back Firewall F2 nicht vorgesehen. Bei Verstößen gegen die Filterregel 10 wird bei ordnungsgemäßer Funktionsweise der Front Firewall F1 bereits durch diese das Datenpaket 300 oder der Bestandteil 301 des Datenpaketes 300 blockiert. Gelangt dieses aber zur Back Firewall F2 und wird dort aufgrund der Filterregel 10 als verdächtig oder gefährlich in die zweite Gefahrenkategorie eingestuft, so liegt ein nicht ordnungsgemäßer Zustand der Front Firewall F1 vor. Es kann sich dabei um eine Manipulation der Front Firewall F1 handeln oder um einen Defekt.

Im Fall einer Manipulation ist es denkbar, dass ein Angreifer M die erste Einheit F1 manipuliert hat. Es ist dann ferner denkbar, dass in einem zweiten Schritt eine Manipulation der zweiten Einheit F2 durch den Angreifer M erfolgen soll. Durch das vorgeschlagene Ausgeben des Alarmsignales A kann ein Wartungsteam oder Sicherheitsservice informiert werden, welcher die Netzwerkfiltereinrichtung 1 und insbesondere die erste Einheit F1 auf Unversehrtheit überprüfen kann. Somit kann eine Schwachstelle in der Front Firewall F1 erkannt werden und gegebenenfalls zeitnah reagiert werden. Ferner kann nach Auslösen des Alarmsignales A die zweite Einheit F2 auf eine ähnliche Schwachstelle hin überprüft werden.

Figur 2 zeigt ein zweites Ausführungsbeispiel der Erfindung, in welchem zwischen einem ersten Netzwerk 100 und einem weiteren Netzwerk 200' eine sogenannte demilitarisierte Zone DMZ vorgesehen ist. In der demilitarisierten Zone DMZ ist ein Webserver aufgestellt, der als Protokollumsetzer dient. Er verhindert einen direkten Zugriff von dem ersten Netzwerk 100 auf das weitere Netzwerk 200'. Die gesamte Kommunikation zwischen dem ersten Netzwerk 100 und dem weiteren Netzwerk 200' wird über die demilitarisierte Zone DMZ geleitet. Zwischen dem ersten Netzwerk 100 und der demilitarisierten Zone DMZ ist eine Netzwerkfiltereinrichtung 1 eingerichtet, welche unter Berücksichtigung der verwendeten Protokolle zwischen einem öffentlichen Netzwerk und dem Webserver einen Datenverkehr, wie ein Datenpaket 300, überprüft und filtert.

Die Netzwerkfiltereinrichtung 1 weist dazu eine erste Einheit F1 als Front Firewall und eine zweite Einheit F2 als Back Firewall auf. Die Front Firewall F1 wird dabei wiederum mit der identischen Filterregel 10 versehen, mit der auch die Back Firewall F2 versehen wird. Wiederum dient die Back Firewall F2 als Sensor für eine Manipulation der Front Firewall F1 und gibt gegebenenfalls ein Alarmsignal A aus. Die Front Firewall F1 wird mit einem Betriebssystem betrieben, welches von dem Betriebssystem der Back Firewall F2 abweicht. Beispielsweise wird die Front Firewall F1 unter einem Windows Betriebssystem betrieben, die Back Firewall F2 unter einem Linux-System. Somit können Schwachstellen, welche durch eine Implementierung oder insbesondere einen Implementierungsfehler insbesondere auf einer der Firewalls vorhanden sind, auf der anderen Firewall mit abweichendem Betriebssystem dagegen nicht vorhanden sein. So ist ein Angriffspunkt für einen Angreifer M insbesondere nur auf einer der Firewalls vorhanden.

Figur 2 zeigt, wie zusätzlich zwischen der demilitarisierten Zone DMZ und dem weiteren Netzwerk 200' eine weitere Netzwerkfiltereinrichtung 1' zum Ausgeben eines weiteren Alarmsignales A' eingerichtet ist. Auch die weitere Netzwerkfiltereinrichtung 1' realisiert eine weitere Front Firewall F1' und eine weitere Back Firewall F2'. Die jeweils implementierte weitere Filterregel 10' ist auf die Protokolle ausgerichtet, welche für den Übertragungsweg von Datenpaketen zwischen der demilitarisierten Zone DMZ und dem weiteren Netzwerk 200', beispielsweise einem Steuerungsnetzwerk mit hohen Safety-Anforderungen, verwendet werden.

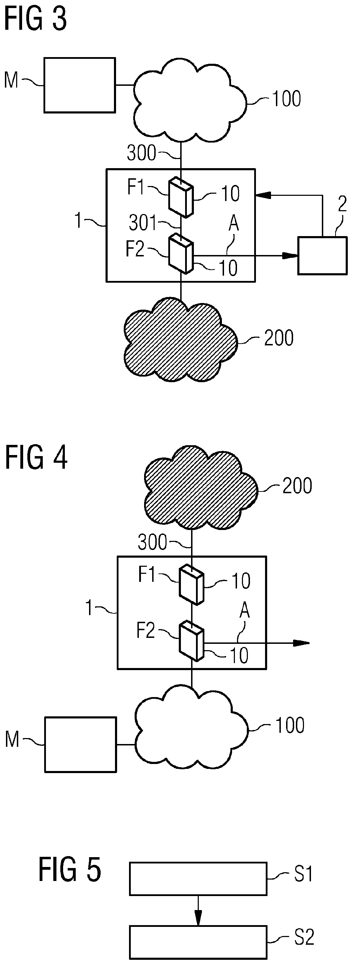

Figur 3 zeigt schematisch, wie zusätzlich zum Ausgeben des Alarmsignals A durch die zweite Einheit F2 eine Steuerungseinheit 2 für eine Veranlassung von geeigneten Maßnahmen auf die Netzwerkfiltereinrichtung 1 rückwirkt. Somit kann nach Auslösen des Alarmsignals A ein Datenverkehr zwischen dem ersten Netzwerk 100 und dem zweiten Netzwerk 200 vollständig unterbunden werden.

In einem vierten Ausführungsbeispiel der Erfindung wird durch die zweite Einheit F2 ein Sensor zur Überprüfung einer korrekten Funktionsweise der ersten Einheit F1 gebildet, wobei ein Datenpaket 300 von einem sicheren zweiten Netzwerk 200 in ein erstes Netzwerk 100 weitergeleitet werden soll, wobei das erste Netzwerk 100 ein öffentliches Netzwerk darstellt. Dies ist in Figur 4 dargestellt.

Es besteht daher die Anforderung an die Netzwerkfiltereinrichtung 1, nur dafür vorgesehene Datenpakete 300 von dem zweiten Netzwerk 200, welches kritische oder schützenswerte Daten enthält, nach außen gelangen zu lassen. Dabei kann es sich um personenbezogene Daten handeln, welche in dem geschützten zweiten Netzwerk 200 verarbeitet werden und welche nicht einer erhöhten Gefahr des Missbrauchs innerhalb des unsichereren ersten Netzwerks 100 ausgesetzt werden sollen. Dabei erfüllt die Netzwerkfiltereinrichtung 1 insbesondere die Anforderung, ein aus dem sicheren Netzwerk 200 ausgehendes Datenpaket 300 vor einem Angreifer M in dem ersten Netzwerk 100 vor unberechtigtem Auslesen zu schützen.

Figur 5 zeigt, wie in einem ersten Schritt S1 ein Bestandteil des mindestens einen Datenpaketes 300 durch die erste Einheit F1 weitergeleitet wird, da aufgrund der Filterregel 10 durch die erste Einheit F1 ein erstes Freigabesignal erzeugt wird. Dabei erkennt die erste Einheit F1 einen Angriff nicht. In einem zweiten Schritt S2 wird durch die zweite Einheit F2 ein Alarmsignal A ausgegeben, da aufgrund der Filterregel 10 durch die zweite Einheit F2 eine zweite Einordnung eines Bestandteiles 301 des Datenpaketes 300 eine zweite Gefahrenkategorie durchgeführt wird.

Die Filterregel 10 ist dabei auf der ersten Einheit F1 die gleiche wie auf der zweiten Einheit F2. Die erste Einheit F1 ist als Firewall eines ersten Herstellers ausgeführt, die zweite Einheit F2 als Firewall eines zweiten Herstellers. Daher bestehen Abweichungen in der Implementierung, die insbesondere abweichende Schwachstellen bei einem Angriff bieten. Wird durch einen Angreifer M eine Schwachstelle bei der ersten Einheit F1 erkannt und umgangen, so dass der Bestandteil 301 des Datenpaketes 300 durch die erste Einheit F1 weitergeleitet wird, welches aufgrund der Filtervorschrift 10 hätte blockiert werden müssen, so ist zusätzlich eine Schwachstelle in der zweiten Einheit F2 zu identifizieren, um den Angriff erfolgreich durchzuführen und eine Weiterleitung in das zweite Netzwerk 200 zu erreichen.

Die zweite Einheit F2 prüft die von der ersten Einheit F1 bereits gefilterten Datenpakete erneut und löst einen Alarm aus, sobald sie ein Datenpaket empfängt, welches bereits die erste Einheit F1 hätte ausfiltern sollen.

Es kann in einer Variante sinnvoll sein, nur einen reduzierten Regelsatz durch eine erste Einheit F1 und zusätzlich eine zweite Einheit F2 filtern zu lassen. Insbesondere kann aus Kostengründen eine breitere Filterregel einmalig auf der ersten Einheit F1 konfiguriert werden. Nur ein Anteil dieses Filterregelsatzes stellt die Filterregel 10 dar, welche zusätzlich auf der zweiten Einheit F2 konfiguriert ist.

Dabei können insbesondere Filterregeln für die Überprüfung niedriger Protokollebenen, welche nur wenig Rechenaufwand bei der Prüfung benötigen, doppelt konfiguriert werden. Es ist ebenso denkbar, aufwendigere Filterregeln auf Anwendungsebene doppelt prüfen oder filtern zu lassen. Insbesondere kann damit eine zweite Einheit verbaut werden, welche leistungsschwächer ist als die erste Einheit. Dennoch ist es für den beschränkten Filterregelsatz, welcher anstelle der gesamten Filtervorschrift nochmals durch die zweite Einheit durchgesetzt wird, sichergestellt, dass ein Alarm ausgelöst wird, falls bereits durch die erste Einheit ein Blockieren eines Datenpaketes aufgrund desjenigen Anteils der Filtervorschrift, welcher doppelt durchgesetzt wird, hätte stattfinden müssen.

## Patentansprüche

1. Verfahren zum Filtern mindestens eines Datenpaketes (300) mittels einer Netzwerkfiltereinrichtung (1) an einer Kopplungsstelle zwischen einem ersten Netzwerk (100) und einem zweiten Netzwerk (200), wobei
- die Netzwerkfiltereinrichtung (1) aus einer ersten Einheit (F1) und einer zweiten Einheit (F2) besteht und die erste Einheit (F1) und die zweite Einheit (F2) seriell angeordnet werden;
- die erste Einheit (F1) eine Filterregel (10) aufweist;
- die zweite Einheit (F2) die Filterregel (10) aufweist;
- in einem ersten Schritt (S1) mindestens ein Bestandteil (301) des mindestens einen Datenpaketes (300) durch die erste Einheit (F1) blockiert wird, falls aufgrund der Filterregel (10) durch die erste Einheit (F1) eine erste Einordnung des mindestens einen Bestandteiles (301) in eine erste Gefahrenkategorie durchgeführt wird, und weitergeleitet wird, falls aufgrund der Filterregel (10) durch die erste Einheit (F1) ein erstes Freigabesignal erzeugt wird;
- in einem zweiten Schritt (S2) durch die zweite Einheit (F2) ein Alarmsignal (A) ausgegeben wird, falls aufgrund der Filterregel (10) durch die zweite Einheit (F2) eine zweite Einordnung des mindestens einen Bestandteiles (301) in eine zweite Gefahrenkategorie durchgeführt wird.

2. Verfahren nach Anspruch 1, wobei der mindestens eine Bestandteil (301) durch die zweite Einheit (F2) blockiert wird, falls die zweite Einordnung in die zweite Gefahrenkategorie durchgeführt wird.

3. Verfahren nach Anspruch 1 oder 2, wobei durch die Netzwerkfiltereinrichtung (1) in Abhängigkeit von dem Alarmsignal (A) ein Protokoll erstellt wird.

4. Verfahren nach einem der vorstehenden Ansprüche, wobei durch die Netzwerkfiltereinrichtung (1) in Abhängigkeit von dem Alarmsignal (A) eine Benachrichtigung eines Überwachungssystems veranlasst wird.

5. Verfahren nach einem der vorstehenden Ansprüche, wobei in Abhängigkeit von dem Alarmsignal (A) ein Umschalten der ersten Einheit (F1) und/oder der zweiten Einheit (F2) auf eine neue Filterregel durchgeführt wird.

6. Verfahren nach einem der vorstehenden Ansprüche, wobei in Abhängigkeit von dem Alarmsignal (A) ein Sperren der ersten Einheit (F1) und/oder der zweiten Einheit (F2) durchgeführt wird.

7. Verfahren nach einem der vorstehenden Ansprüche, wobei in Abhängigkeit von dem Alarmsignal (A) einem System Parameter für einen Notfallzustand vorgegeben werden.

8. Verfahren nach einem der vorstehenden Ansprüche, wobei die erste Einheit (F1) und/oder die zweite Einheit (F2) als Firewall oder Datendiode ausgestaltet werden.

9. Verfahren nach einem der vorstehenden Ansprüche, wobei das erste Netzwerk (100) ein externes oder öffentliches Netzwerk und das zweite Netzwerk (200) ein internes Netzwerk darstellt.

10. Verfahren nach einem der vorstehenden Ansprüche, wobei das mindestens eine Datenpaket (300) von dem ersten Netzwerk (100) in das zweite Netzwerk (200) oder von dem zweiten Netzwerk (200) in das erste Netzwerk (100) übermittelt wird.

11. Verfahren nach einem der vorstehenden Ansprüche, wobei die erste Einheit (F1) und die zweite Einheit (F2) mit unterschiedlichen Betriebssystemen ausgebildet werden und/oder von unterschiedlichen Herstellern hergestellt werden.

12. Verfahren nach einem der vorstehenden Ansprüche, wobei durch die erste Einheit (F1) und die zweite Einheit (F2) ein identischer Durchsatz erreicht wird.

13. Verfahren nach einem der vorstehenden Ansprüche, wobei eine leistungsfähigere Einheit in einer Übermittlungsrichtung vor einer leistungsschwächeren Einheit eingerichtet wird.

14. Verfahren nach einem der vorstehenden Ansprüche, wobei das zweite Netzwerk (200) als Isolationszone (DMZ) zwischen dem ersten Netzwerk (100) und einem weiteren Netzwerk (200') eingerichtet ist.

15. Verfahren nach einem der vorstehenden Ansprüche, wobei auf der ersten Einheit (F1) die Filterregel (10) einen Teil eines Filterregelsatzes darstellt, wobei das Datenpaket durch die erste Einheit (F1) aufgrund des Filterregelsatzes geprüft wird.

16. Netzwerkfiltereinrichtung zum Filtern mindestens eines Datenpaketes (300) an einer Kopplungsstelle zwischen einem ersten Netzwerk (100) und einem zweiten Netzwerk (200), umfassend eine erste Einheit (F1) und eine zweite Einheit (F2), wobei
- die erste Einheit (F1) und die zweite Einheit (F2) seriell angeordnet sind, die erste Einheit (F1) aufweisend eine Filterregel (10) und die zweite Einheit (F2) aufweisend die Filterregel (10);
- mindestens ein Bestandteil (301) des mindestens einen Datenpaketes (300) zum Blockieren durch die erste Einheit (F1) ausgeführt ist, falls aufgrund der Filterregel (10) durch die erste Einheit (F1) eine erste Einordnung des mindestens einen Bestandteiles (301) in eine erste Gefahrenkategorie durchgeführt wird, und zum Weiterleiten durch die erste Einheit (F1) ausgeführt ist, falls aufgrund der Filterregel (10) durch die erste Einheit (F1) ein erstes Freigabesignal erzeugt wird;
- die zweite Einheit (F2) zum Ausgeben eines Alarmsignals (A) ausgestaltet ist, falls aufgrund der Filterregel (10) durch die zweite Einheit (F1) eine zweite Einordnung des mindestens einen Bestandteiles (301) in eine zweite Gefahrenkategorie durchgeführt wird.

17. Netzwerkfiltereinrichtung nach Anspruch 16, ferner eine Steuerungseinheit (2) umfassend zur Durchführung des Verfahrens gemäß einem der Ansprüche 5 bis 7.

## Claims

1. Method for filtering at least one data packet (300) by means of a network filter device (1) at a coupling point between a first network (100) and a second network (200), wherein
- the network filter device (1) consists of a first unit (F1) and a second unit (F2), and the first unit (F1) and the second unit (F2) are arranged in series;
- the first unit (F1) has a filter rule (10);
- the second unit (F2) has the filter rule (10);
- at least one part (301) of the at least one data packet (300) is blocked by the first unit (F1) in a first step (S1) if, on the basis of the filter rule (10), the first unit (F1) carries out a first classification of the at least one part (301) in a first risk category, and is forwarded if, on the basis of the filter rule (10), the first unit (F1) generates a first release signal;
- the second unit (F2) outputs an alarm signal (A) in a second step (S2) if, on the basis of the filter rule (10), the second unit (F2) carries out a second classification of the at least one part (301) in a second risk category.

2. Method according to Claim 1, wherein the at least one part (301) is blocked by the second unit (F2) if the second classification in the second risk category is carried out.

3. Method according to Claim 1 or 2, wherein the network filter device (1) creates a log on the basis of the alarm signal (A).

4. Method according to one of the preceding claims, wherein the network filter device (1) initiates a notification of a monitoring system on the basis of the alarm signal (A).

5. Method according to one of the preceding claims, wherein the first unit (F1) and/or the second unit (F2) is/are changed over to a new filter rule on the basis of the alarm signal (A) .

6. Method according to one of the preceding claims, wherein the first unit (F1) and/or the second unit (F2) is/are blocked on the basis of the alarm signal (A).

7. Method according to one of the preceding claims, wherein a system parameter for an emergency state is predefined on the basis of the alarm signal (A).

8. Method according to one of the preceding claims, wherein the first unit (F1) and/or the second unit (F2) is/are in the form of a firewall or a data diode.

9. Method according to one of the preceding claims, wherein the first network (100) is an external or public network and the second network (200) is an internal network.

10. Method according to one of the preceding claims, wherein the at least one data packet (300) is transmitted from the first network (100) to the second network (200) or from the second network (200) to the first network (100).

11. Method according to one of the preceding claims, wherein the first unit (F1) and the second unit (F2) are designed with different operating systems and/or are produced by different manufacturers.

12. Method according to one of the preceding claims, wherein an identical throughput is achieved by the first unit (F1) and the second unit (F2).

13. Method according to one of the preceding claims, wherein a more powerful unit is set up upstream of a less powerful unit in a transmission direction.

14. Method according to one of the preceding claims, wherein the second network (200) is set up as an isolation zone (DMZ) between the first network (100) and a further network (200').

15. Method according to one of the preceding claims, wherein the filter rule (10) constitutes part of a set of filter rules on the first unit (F1), wherein the data packet is checked by the first unit (F1) on the basis of the set of filter rules.

16. Network filter device for filtering at least one data packet (300) at a coupling point between a first network (100) and a second network (200), comprising a first unit (F1) and a second unit (F2), wherein
- the first unit (F1) and the second unit (F2) are arranged in series, the first unit (F1) having a filter rule (10) and the second unit (F2) having the filter rule (10);
- at least one part (301) of the at least one data packet (300) is designed to be blocked by the first unit (F1) if, on the basis of the filter rule (10), the first unit (F1) carries out a first classification of the at least one part (301) in a first risk category, and is designed to be forwarded by the first unit (F1) if, on the basis of the filter rule (10), the first unit (F1) generates a first release signal;
- the second unit (F2) is configured to output an alarm signal (A) if, on the basis of the filter rule (10), the second unit (F1) carries out a second classification of the at least one part (301) in a second risk category.

17. Network filter device according to Claim 16, also comprising a control unit (2) for carrying out the method according to one of Claims 5 to 7.

## Revendications

1. Procédé de filtrage d'au moins un paquet de données (300) au moyen d'un dispositif de filtrage de réseau (1) en un point de couplage entre un premier réseau (100) et un deuxième réseau (200),
- le dispositif de filtrage de réseau (1) étant constitué d'une première unité (F1) et d'une deuxième unité (F2) et la première unité (F1) ainsi que la deuxième unité (F2) étant agencées en série;
- la première unité (F1) présentant une règle de filtre (10);
- la deuxième unité (F2) présentant cette règle de filtre (10);
- dans une première étape (S1) au moins un composant (301) du au moins un paquet de données (300) étant bloqué par la première unité (F1), dans le cas où, sur base de la règle de filtre (10) par la première unité (F1) un premier classement du au moins un composant (301) est effectué dans une première catégorie de danger, et étant transféré dans le cas où, sur base de la règle de filtre (10) par la première unité (F1) un premier signal de validation est produit;
- à une deuxième étape (S2) par la deuxième unité (F2) un signal d'alarme (A) étant déclenché dans le cas où, sur base de la règle de filtre (10) par la deuxième unité (F2) un deuxième classement du au moins un composant (301) est effectué dans une deuxième catégorie de danger.

2. Procédé selon la revendication 1, le au moins un composant (301) étant bloqué par la deuxième unité (F2) dans le cas où le deuxième classement est effectué dans la deuxième catégorie de danger.

3. Procédé selon la revendication 1 ou 2, un protocole étant établi par le dispositif de filtrage de réseau (1) en fonction du signal d'alarme (A).

4. Procédé selon l'une des revendications précédentes, l'avis d'un système de surveillance étant émis par le dispositif de filtrage de réseau (1) en fonction du signal d'alarme (A).

5. Procédé selon l'une des revendications précédentes, une commutation de la première unité (F1) et/ou de la deuxième unité (F2) étant effectuée sur une nouvelle règle de filtre en fonction du signal d'alarme (A).

6. Procédé selon l'une des revendications précédentes, un empêchement de la première unité (F1) et/ou de la deuxième unité (F2) étant effectué en fonction du signal d'alarme (A).

7. Procédé selon l'une des revendications précédentes, des paramètres d'état d'urgence étant prédéfini pour un système en fonction du signal d'alarme (A).

8. Procédé selon l'une des revendications précédentes, la première unité (F1) et/ou la deuxième unité (F2) étant réalisées sous forme de pare-feu ou de diode de données.

9. Procédé selon l'une des revendications précédentes, le premier réseau (100) représentant un réseau externe ou public et le deuxième réseau (200) représentant un réseau interne.

10. Procédé selon l'une des revendications précédentes, le au moins un paquet de données (300) étant retransmis du premier réseau (100) au deuxième réseau (200) ou du deuxième réseau (200) au premier réseau (100).

11. Procédé selon l'une des revendications précédentes, la première unité (F1) et la deuxième unité (F2) étant configurées avec des systèmes d'exploitation différents et/ou étant fabriquées par différents fabricants.

12. Procédé selon l'une des revendications précédentes, une vitesse de transmission identique étant réalisée par la première unité (F1) et la deuxième unité (F2).

13. Procédé selon l'une des revendications précédentes, une unité plus puissante dans un sens de retransmission étant installée avant une unité de puissance plus faible.

14. Procédé selon l'une des revendications précédentes, le deuxième réseau (200) étant installé comme zone isolée (DMZ) entre le premier réseau (100) et un autre réseau (200').

15. Procédé selon l'une des revendications précédentes, sur la première unité (F1) la règle de filtre (10) représentant une partie d'un jeu de règles de filtre, le paquet de données étant vérifié par la première unité (F1) sur base de ce jeu de règles de filtre.

16. Dispositif de filtrage de réseau destiné au filtrage d'au moins un paquet de données (300) en un point de couplage entre un premier réseau (100) et un deuxième réseau (200), comprenant une première unité (F1) et une deuxième unité (F2),
- la première unité (F1) et la deuxième unité (F2) étant agencées en série, la première unité (F1) présentant une règle de filtre (10) et la deuxième unité (F2) présentant cette règle de filtre (10);
- au moins un composant (301) du au moins un paquet de données (300) étant réalisé pour le blocage par la première unité (F1), dans le cas où, sur base de la règle de filtre (10) par la première unité (F1) un premier classement du au moins un composant (301) est effectué dans une première catégorie de danger, et étant réalisé pour le transfert par la première unité (F1) dans le cas où, sur base de la règle de filtre (10) par la première unité (F1) un premier signal de validation est produit;
- la deuxième unité (F2) étant configurée pour la sortie d'un signal d'alarme (A) dans le cas où, sur base de la règle de filtre (10) par la deuxième unité (F1) un deuxième classement du au moins un composant (301) est effectué dans une deuxième catégorie de danger.

17. Dispositif de réseau selon la revendication 16, comprenant en outre une unité de commande (2) pour l'exécution du procédé selon l'une des revendications 5 à 7.
